Europäisches Patentamt

(19) European Patent Office    (11) Numéro de publication : **0 034 850**

Office européen des brevets    **B1**

(12)                    FASCICULE DE BREVET EUROPÉEN

(45) Date de publication du fascicule du brevet :    (51) Int. Cl.³ : **C 06 D   5/06**// C06B21/00
25.07.84

(21) Numéro de dépôt : **81200145.1**

(22) Date de dépôt : **06.02.81**

(54) Procédé de réalisation de charges propulsives isolées.

(30) Priorité : **21.02.80 DE 3006418**

(43) Date de publication de la demande :
**02.09.81 Bulletin 81/35**

(45) Mention de la délivrance du brevet :
**25.07.84 Bulletin 84/30**

(84) Etats contractants désignés :
**AT BE CH FR GB IT LI LU NL SE**

(56) Documents cités :
**BE-A-   834 903**
**BE-A-   877 309**
**FR-A- 2 332 967**
**US-A- 4 120 915**

(73) Titulaire : **"s.a. PRB", Société anonyme**
**Avenue de Broqueville 12**
**B-1150 Bruxelles (BE)**

(72) Inventeur : **Klöhn, Wolfgang**
**Stufelweg 9**
**D-7507 Pfinztal 2 (DE)**
Inventeur : **Müller, Dieter Heinz**
**Rheinstrasse 31**
**D-7500 Karlsruhe (DE)**
Inventeur : **Schubert, Hiltmar**
**Dahlienweg 6**
**D-7519 Walzbachtai (DE)**

(74) Mandataire : **Bockstael, Daniel**
**M.F.J. Bockstael Arenbergstraat 13**
**B-2000 Anvers (BE)**

## Description

La présente invention a trait à un procédé de réalisation de charges propulsives isolées pour des générateurs de gaz à « base-bleed », composées d'un agent propulsif, qui est un mélange d'un ou de plusieurs corps solides, dont au moins un est un oxydant, et d'un liant sous forme d'un élastomère à déformation thermoplastique approprié.

Par générateurs de gaz « base-bleed » s'étendent des charges génératrices de gaz pour des projectiles, tels que surtout des projectiles d'artillerie, qui sont disposées dans le fond, c'est-à-dire dans la base du projectile et libèrent des gaz par combustion d'un agent propulsif, qui s'accumulent dans le vide formé à l'arrière du projectile sur sa trajectoire dans le but de supprimer ce vide d'origine aérodynamique, qui freine le mouvement du projectile (Brevet belge n° 834.903).

Les charges propulsives pour les générateurs de gaz susmentionnés, qui sont généralement de forme cylindrique et présentent un canal de combustion axial, doivent être munies d'une enveloppe isolante pour assurer une combustion graduelle allant de l'intérieur vers l'extérieur et éviter le risque de destruction du générateur en cas de combustion intempestive des couches extérieures de la charge.

Selon le procédé de réalisation conventionnel des charges propulsives isolées pour les générateurs de gaz à « base-bleed », les surfaces extérieures de la charge préformée ou de ses parties, où la combustion doit être évitée, sont revêtues d'une couche de polymères durcissants, liquides, tels que des polybutadiènes à extrémités hydroxylées ou carboxylées, des polyuréthanes liquides, les résines époxy ou des polyesters non saturés, après quoi la masse propulsive et le revêtement isolant sont durcis ensemble. L'enveloppe isolante des charges propulsives isolées connues contient généralement comme composants essentiels des polybutadiènes, polyuréthanes, résines époxy ou polyesters.

Un des inconvénients de ce système connu consiste en ce que l'adhésion de la couche isolante à la masse propulsive ou à l'agent propulsif laisse beaucoup à désirer. C'est la raison pour laquelle on y incorpore des ingrédients capables d'améliorer l'adhérence, ce qui s'effectue toutefois au détriment du prix de revient. Cette adhésion insuffisante a comme conséquence que la combustion de la masse ne se fait pas uniquement de l'intérieur vers l'extérieur, mais que la flamme pénètre également dans les couches extérieures insuffisamment adhérentes, ce qui provoque la destruction de l'enveloppe isolante avec grand risque que les gaz ainsi formés provoquent l'explosion de tout le générateur du projectile par suite du fait que la zone de combustion est excessivement élargie par cette combustion irrégulière et l'écoulement des gaz par le canal axial est franchement insuffisant.

S'y joint l'inconvénient que l'application d'une couche de revêtement à l'état liquide sur la masse propulsive préformée est un procédé assez laborieux et peu économique par suite du fait que chaque fois seules des surfaces séparées peuvent être revêtues et que la masse doit être retournée pour permettre le revêtement des autres surfaces.

Un dernier inconvénient du système conventionnel consiste en ce que les matières employées jusqu'à présent dans les couches isolantes n'ont qu'une faible résistance à la température, par suite du fait que leur application à l'état liquide ne peut se faire qu'avec des compositions peu visqueuses et ne contenant donc que des polymères d'un poids moléculaire relativement bas.

Or, la présente invention a pour objet, d'une part, un nouveau procédé de fabrication de charges propulsives isolées et, d'autre part, une charge propulsive à enveloppe isolante ainsi fabriquée, qui est exempte de tous les inconvénients susmentionnés des charges propulsives connues jusqu'à présent et se distingue ainsi par une excellente adhésion et une forte liaison entre l'enveloppe isolante à sa surface, ainsi que par une excellente résistance à la combustion de la couche isolante.

L'invention prévoit à cet effet que la masse propulsive est introduite et pressée à température élevée dans une enveloppe isolante, dont un des composants essentiels est un élastomère à déformation thermoplastique faisant office de liant, que la masse propulsive à enveloppe isolante se caractérise en ce que son liant se compose d'un élastomère à déformation thermoplastique, que l'enveloppe isolante contient comme composant essentiel un élastomère du même genre que le précédent, et que le liant de la masse propulsive et l'enveloppe isolante sont intimement liés entre eux.

L'enveloppe isolante n'est, conformément au principe de l'invention, pas appliquée par enduction à l'état liquide sur la masse propulsive formée au préalable. L'enveloppe isolante est fabriquée séparément à partir d'une matière de base granulée, et cela soit par moulage sous pression et à haute température dans une forme appropriée, soit par moulage par injection. L'enveloppe isolante est retirée du moule après refroidissement et puis introduite dans la forme où elle est appliquée sous pression à la masse propulsive.

Un mode de mise en œuvre du procédé selon l'invention prévoit que l'agent propulsif préformé de manière connue en soi sous forme de masse ou charge propulsive est introduit dans l'enveloppe isolante, qui y est appliquée de manière non conventionnelle sous pression et à température élevée.

Suivant un mode de mise en œuvre particulièrement avantageux du procédé selon l'invention, l'agent propulsif est introduit à l'état granulé dans l'enveloppe isolante, ce qui présente le grand avantage de supprimer le stade de préfaçonnage de la charge propulsive, qui est directement façonnée sous pression dans son enveloppe isolante confectionnée d'avance.

Bien que la charge propulsive puisse être faite d'une pièce, elle est d'habitude réalisée par la réunion de deux corps semi-cylindriques identiques. En effet, l'expression de masse ou charge propulsive s'applique dans le sens que lui réserve l'invention aussi bien à un corps de forme cylindrique à canal axial pour l'évacuation des gaz, qu'à un corps de forme semi-cylindrique muni d'une gorge à section semi-circulaire.

Par réunion sous pression s'obtient une liaison intime et particulièrement solide entre le liant de la charge propulsive, d'une part, et le composant élastomère à déformation thermoplastique de l'enveloppe qui est du même type que ce liant, d'autre part, liaison intime qui est due au fait que, sous l'influence des contraintes de compression, s'obtiennent dans la zone de transition des interpénétrations irréversibles des molécules du liant de la charge propulsive, d'une part, et des molécules de l'enveloppe isolante, d'autre part.

L'avantage essentiel de l'invention consiste donc surtout en cette liaison intime entre la charge propulsive et son enveloppe isolante. En outre, l'expérience apprend que l'enveloppe isolante selon l'invention jouit d'une résistance à la destruction par fusion ou combustion qui est sensiblement meilleure que celle des couches isolantes connues.

A côté dudit composant principal de l'enveloppe isolante selon l'invention, qui est un élastomère à déformation thermoplastique, à savoir, suivant un mode de mise en œuvre particulièrement intéressant, un élastomère à triple bloc à structure régulièrement ordonné, c'est-à-dire en particulier un copolymère de butadiène et de styrène ou d'isoprène et de styrène, l'enveloppe isolante pourra également contenir de faibles quantités de charges organiques ou inorganiques incombustibles, telles que la poudre de quartz, la silice, l'oxyde de magnésium, le carbonate de calcium et même le graphite parmi les charges inorganiques. Ces charges servent à augmenter la résistance thermique de l'enveloppe isolante pendant la combustion, résistance qui est déjà sensiblement améliorée par rapport à celle des couches isolantes habituelles grâce à la réalisation de l'ensemble par le procédé de l'invention.

Un autre avantage de l'invention consiste en ce qu'elle permet une automatisation poussée de la fabrication des charges propulsives à enveloppe isolante concernées grâce au fait que l'introduction forcée de la masse propulsive dans l'enveloppe se prête facilement à être intégrée dans un processus de fabrication en série hautement automatisé, et cela contrairement au processus de fabrication traditionnel qui se prête à peine à l'automatisation.

D'autres caractéristiques et avantages du système selon l'invention ressortiront de la description détaillée suivante d'un exemple de mise en œuvre, donnée sans la moindre intention restrictive.

L'enveloppe isolante selon cet exemple de mise en œuvre se présente essentiellement sous forme d'une enveloppe cylindrique d'une longueur intérieure totale de 130 mm, d'un diamètre de 120 mm et d'une épaisseur de paroi de 2 mm. Elle est munie, dans au moins un de ses bases, d'une ouverture symétrique centrale d'un diamètre de 43,5 mm pour l'évacuation des gaz de combustion. Comme la charge propulsive se compose généralement de deux parties semi-cylindriques munies chacune d'une gorge longitudinale de section semi-circulaire, gorges qui après la réunion des deux parties forment un canal axial de section circulaire, l'enveloppe isolante pourra également se composer de deux parties ou coquilles semi-cylindriques fabriquées séparément.

L'enveloppe isolante selon l'invention contient comme composant essentiel, selon un mode d'exécution particulièrement avantageux, un copolymère de butadiène et d'isoprène ou d'isoprène et de styrène à côté d'une faible teneur en silice ($SiO_2$) en guise de charge non combustible destinée à augmenter la résistance thermique de l'enveloppe pendant la combustion de la masse propulsive.

Suivant un mode de mise en œuvre préféré du procédé de fabrication de charges propulsives isolées pour des générateurs de gaz à « base-bleed », une enveloppe isolante selon l'invention du genre décrit ci-dessus, qui se présente sous forme d'une coquille semi-cylindrique et est munie dans au moins une de ses bases d'une découpe semi-circulaire, est disposée dans une matrice et y est ensuite remplie d'une masse propulsive granulée, qui contient comme liant essentiel également un copolymère de butadiène et de styrène ou d'isoprène et de styrène. L'ensemble est ensuite chauffé à une température d'environ 120 °C et comprimé à cette température sous une pression de 20 MPa.

L'enveloppe isolante et le liant de la masse propulsive granulée, ramollis dans les conditions décrites ci-dessus, se réunissent intimement sous l'effet de la haute pression y exercée de manière à former un ensemble intimement et solidement réuni. Le corps semi-cylindrique ainsi obtenu est, après son refroidissement, retiré de la matrice et monté en contact avec un corps de forme identique faisant office de contre-partie dans le fond du projectile concerné.

Les résultats d'essais de tir comparatifs montrent que, contrairement aux revêtements isolants connus qui sont entièrement détruits par combustion, l'enveloppe isolante selon l'invention reste, à part quelques légères carbonisations superficielles locales, pratiquement entièrement intacte à sa surface extérieure sans la moindre solution de continuité, et cela bien que sa paroi soit sensiblement plus mince que les revêtements isolants connus.

Inutile de souligner que l'invention ne se limite d'aucune façon au mode d'exécution décrit dans les lignes précédentes, mais se prête à de nombreuses réalisations différentes de ses caractéristiques prises individuellement ou mutuellement combinées de multiples façons, évidemment à condition de ne pas dépasser son cadre délimité par les revendications définies ci-après.

## Revendications

1. Procédé de réalisation de charges propulsives pour des générateurs de gaz à « blase-bleed » composées d'un agent propulsif, qui est un mélange d'un ou de plusieurs corps solides, dont au moins un est un oxydant, et d'un liant sous forme d'un élastomère à déformation thermoplastique approprié, caractérisé en ce que la masse propulsive est introduite dans une enveloppe isolante, qui à titre de composant essentiel contient un liant de même nature que l'élastomère à déformation thermoplastique susmentionné, et est réunie avec elle à température élevée et sous haute pression.

2. Procédé selon la revendication 1, caractérisé en ce que la masse propulsive dont est remplie l'enveloppe isolante est, avant sa compression, une matière granulée.

3. Procédé selon la revendication 1, caractérisé en ce que la masse propulsive est introduite dans l'enveloppe isolante sous forme d'un corps préformé ou moulé d'avance.

4. Procédé selon l'une ou l'autre des revendications précédentes, caractérisé en ce que l'ensemble de la masse propulsive et l'enveloppe isolante est pendant sa compression chauffé à une température de 100-140 °C.

5. Procédé selon la revendication 4, caractérisé en ce que la compression s'effectue à la température de 120 °C.

6. Procédé selon l'une ou l'autre des revendications précédentes, caractérisé en ce que la compression de la masse propulsive dans l'enveloppe isolante s'effectue sous une pression de 10-50 MPa.

7. Procédé selon la revendication 6, caractérisé en ce que la compression s'effectue sous une pression de 20 MPa.

## Claims

1. Realization process for preparing insulated propellant charges for « base-bleed » gas generators consisting of a propulsive agent, that is a mixture of one or more solid bodies, at least one of which is an oxidizing agent, and of a binding agent in the form of an appropriate thermoplastically deformable elastomere, characterized thereby that the propulsive mass is introduced into an isolating envelope which, as an essential component, comprises a binding agent of the same nature as the above-mentioned thermoplastically deformable elastomere, and is united with it at a high temperature and under high pressure.

2. Process according to claim 1, characterized thereby that the propulsive mass with which the isolating envelope is filled, is a granular substance before its compression.

3. Process according to claim 1, characterized thereby that the propulsive mass is introduced into the isolating envelope in the form of a preformed or premoulded body.

4. Process according to any of the preceding claims, characterized thereby that the whole of the propulsive mass and the isolating envelope is heated at a temperature of 100-140 °C during its compression.

5. Process according to claim 4, characterized thereby that the compression is effected at a temperature of 120 °C.

6. Process according to any of the preceding claims, characterized thereby that the compression of the propulsive mass into the isolating envelope is effected under a pressure of 10-15 MPa.

7. Process according to claim 6, characterized thereby that the compression is effected under a pressure of 20 MPa.

## Ansprüche

1. Verfahren zur Herstellung von Treibladungen für Gaserzeuger des « Base-Bleed »-Typs, welche aus einem Treibmittel zusammengesetzt sind, die ein Gemisch aus einem oder mehreren Festkörpern, von denen mindestens eines ein Oxidationsmittel ist, und einem Bindemittel in der Form eines geeigneten thermoplastisch verformbaren Elastomeren ist, dadurch gekennzeichnet, dass die Treibmasse in eine Isolierhülle eingeführt wird, welche als wesentlichen Bestandteil ein Bindemittel derselben Art wie das obenerwähnte thermoplastisch verformbare Elastomere enthält und bei hoher Temperatur und hohem Druck mit ihr vereinigt wird.

2. Verfahren nach Anspruch 1, dadurch gekennzeichnet, dass die Treibmasse, mit der die Isolierhülle gefüllt wird, vor ihrer Kompression ein körniger Stoff ist.

3. Verfahren nach Anspruch 1, dadurch gekennzeichnet, dass die Treibmasse in der Form eines vorgebildeten oder vorgeformten Körpers in die Isolierhülle eingeführt wird.

4. Verfahren nach irgendeinem der vorhergehenden Ansprüche, dadurch gekennzeichnet, dass das aus Treibmasse und Isolierhülle bestehende Ganze während seiner Kompression auf 100-140 °C erhitzt wird.

5. Verfahren nach Anspruch 4, dadurch gekennzeichnet, dass die Kompression bei 120 °C erfolgt.

6. Verfahren nach irgendeinem der vorangehenden Ansprüche dadurch gekennzeichnet, das die Kompression der Treibmasse in der Isolierhülle bei einem Druck von 10-50 MPa stattfindet.

7. Verfahren nach Anspruch 6, dadurch gekennzeichnet, dass die Kompression bei einem Druck von 20 MPa stattfindet.